# EUROPÄISCHE PATENTSCHRIFT

(11) **EP 3 313 674 B1**
(45) Veröffentlichungstag und Bekanntmachung des Hinweises auf die Patenterteilung: **18.08.2021**
(21) Anmeldenummer: 16705787.6
(22) Anmeldetag: 23.02.2016
(51) Int. Cl.: B60C 13/02, B60C 13/00

(54) **FAHRZEUGREIFEN**
VEHICLE TYRE
PNEUMATIQUE DE VEHICULE

(30) Priorität: 24.06.2015 DE 102015211648
(43) Veröffentlichungstag der Anmeldung: 02.05.2018
(73) Patentinhaber: Continental Reifen Deutschland GmbH, 30165 Hannover (DE)
(72) Erfinder: RITTWEGER, Stefan, 30826 Garbsen (DE)
(74) Vertreter: Continental Corporation
(86) Internationale Anmeldenummer: PCT/EP2016/053704
(87) Internationale Veröffentlichungsnummer: WO 2016/206821

(56) Entgegenhaltungen:
- EP-A1- 2 647 510
- JP-A- 2004 017 829

## Beschreibung

Die Erfindung betrifft einen Fahrzeugreifen mit zwei Seitenwänden und mit zumindest einem schraffurartig gestalteten Flächenelement auf zumindest einer Seitenwand, welches eine Vielzahl von nebeneinander und bogenförmig verlaufenden Erhebungen aufweist, welche von radial innen nach radial außen unter einem zunehmenden spitzen Winkel zur radialen Richtung und parallel zueinander verlaufen.

Derartige Fahrzeugreifen sind aus der JP 2004 017829 A und der EP 2 647 510 A1 bekannt. Diese Fahrzeugreifen sind mit schraffurartig gestalteten Flächenelementen auf den Seitenwänden versehen, wobei sich diese Schraffur aus einer Vielzahl von nebeneinander und bogenförmig verlaufenden Erhebungen zusammensetzt. Diese Erhebungen verlaufen von radial innen nach radial außen unter einem zunehmenden spitzen Winkel zur radialen Richtung und im Wesentlichen parallel zueinander.

Ein weiterer Fahrzeugreifen mit schraffurartig gestalteten Flächenelementen auf den Seitenwänden ist aus der DE 10 2012 105 864 A1 bekannt. Die Erhebungen verlaufen entlang von Kurven einer Kurvenschar, derart, dass sie längs ihrer Erstreckung an der Reifenseitenwand von radial innen nach radial außen mit gleicher, konstanter Krümmung und mit einem von radial innen nach radial außen hin stetig progressiv zunehmenden Winkel zur radialen Richtung verlaufen. Der gegenseitige Abstand der Erhebungen vergrößert sich daher im Verlauf von radial innen nach radial außen. Aus der DE 10 2012 105 864 A1 sind weitere Ausführungsformen von schraffurartig gestalteten Flächenelementen bekannt, insbesondere solche, bei welchen sich die Erhebungen geradlinig erstrecken, beispielsweise verlaufen die Erhebungen sämtlich in radialer Richtung oder unter einem spitzen Winkel zur radialen Richtung, sodass sich ihr gegenseitiger Abstand ebenfalls in ihrem Verlauf von radial innen nach radial außen vergrößert. Weitere Ausführungsvarianten von Seitenwandschraffuren aus einer Vielzahl von nebeneinander verlaufenden Erhebungen offenbart die DE 10 2013 108 786 A1. Bei den aus dieser Druckschrift bekannten Ausführungsvarianten bilden die Erhebungen eine Basisschraffur, wobei von Erhebungen aus der Basisschraffur unter übereinstimmend großen Winkeln abgelenkte Abschnitte zumindest eine örtlich begrenzte Schraffurfläche bilden, wobei die abgelenkten Abschnitte durch nochmaliges, unter übereinstimmend großen Winkel erfolgendes Ablenken in zumindest eine weitere Schraffurfläche übergehen. Die Erhebungen in sämtlichen Schraffurflächen sind somit Abschnitte im Verlauf von Erhebungen aus der Basisschraffur. Die abgelenkten Abschnitte können geradlinig oder bogenförmig verlaufen.

Schraffurartig gestaltete Flächenelemente in der Seitenwand von Fahrzeugreifen werden üblicherweise zur Erzeugung von Kontrasten, insbesondere als optische Gestaltungselemente oder in Schriftzügen, genützt. Gestaltungselemente oder Schriftzüge aus solchen Flächenelementen sollen gut erkennbar sein. Insbesondere zur Kontrasterzeugung ist es wesentlich, einen möglichst neutralen Reflexionsgrad durch Schraffuren zu erzielen. Die bekannten von radial innen nach radial außen bogenförmig verlaufenden Schraffuren öffnen sich nach außen, das heißt der gegenseitige Abstand der Erhebungen wird mit zunehmender Entfernung der Erhebungen von der Reifenachse größer. Der Kontrast wird daher nach radial außen schwächer. Daraus ergibt sich ein inhomogener Reflexionsgrad der schraffurartig gestalteten Flächenelemente mit sichtbaren Unterschieden in den Graubereichen. Je größer die schraffurartig ausgeführten Flächenelemente sind, umso deutlicher sind die Unterschiede.

Der Erfindung liegt daher die Aufgabe zu Grunde, schraffurartig gestaltete Flächenelemente mit bogenförmig verlaufenden Erhebungen zur Verfügung zu stellen, die an jeder Stelle der Seitenwand, unabhängig davon, ob sie sich radial weiter innen oder radial weiter außen befinden, den gleichen Reflexionsgrad aufweisen und dadurch einen homogenen Graubereich ermöglichen.

Gelöst wird die gestellte Aufgabe erfindungsgemäß dadurch, dass der Krümmungsradius des bogenförmigen Verlaufes der Erhebungen von radial außen nach radial innen kleiner wird, wobei die Erhebungen kurvenstetig entlang von Linien einer Linienschar verlaufen, welche Linien sich aus Linienabschnitten zusammensetzen, die Schnittpunkte zwischen einander benachbarten, gleich beabstandeten, konzentrischen Kreisen, deren Mittelpunkt auf der Reifenachse liegt, und einander benachbarten radialen Hilfslinien, die unter gleich großen Zentriwinkeln verlaufen, verbinden.

Die Erfindung beruht auf der Erkenntnis, dass sich schraffurartig gestaltete Flächenelemente aus bogenförmig verlaufenden Erhebungen dann mit parallel zueinander verlaufenden Erhebungen realisieren lassen, wenn der Krümmungsradius der Bogenform von radial außen nach radial innen kleiner wird. Erfindungsgemäß gestaltete Flächenelemente in der Reifenseitenwand weisen an jeder Stelle den gleichen Reflexionsgrad auf und ergeben einen homogenen Graubereich bei Betrachtung von außen. Dadurch lassen sich Schriftzüge oder Designelemente in der Seitenwand einheitlich und für den Betrachter aufeinander abgestimmt gestalten.

Besonders bevorzugt ist die Maßnahme, den gegenseitigen Abstand der konzentrischen Kreise an den gegenseitigen Abstand der höchsten Stellen der Erhebungen bzw. der Mitte der Erhebungen - im Querschnitt derselben betrachtet - anzupassen.

Der Verlauf der Bogenform der Erhebungen an der Seitenwand des Fahrzeugluftreifens ergibt sich aus der Wahl der Größe des bereits erwähnten Zentriwinkels. Für die Gestaltung von Flächenelementen an Seitenwänden von Fahrzeugluftreifen ist es dabei vorteilhaft, wenn der Zentriwinkel zwischen den radialen Hilfslinien maximal 15° beträgt. Je größer der Zentriwinkel gewählt wird, umso mehr nähert sich die Bogenform der Erhebungen der Umfangsrichtung in der Seitenwand. Bei kleinen Zentriwinkeln verlaufen die Erhebungen mehr in radialer Richtung. Dabei sollte der Zentriwinkel zwischen den radialen Hilfslinien mindestens 1°, insbesondere mindestens 2°, betragen, der maximale Zentriwinkel beträgt vorzugsweise 10°. Die aus derartig verlaufenden Erhebungen gestalteten Flächenelemente sind besonders gut sichtbar und können besonders harmonisch, auch in Kombination miteinander, ausgeführt werden.

Auch die Dimensionierung der Erhebungen hat einen gewissen Einfluss auf den erzielbaren gleichmäßigen Reflexionsgrad der Flächenelemente. In diesem Zusammenhang ist es besonders bevorzugt, wenn der gegenseitige Abstand der Erhebungen an ihren höchsten Stellen bzw. ihrer Mitte 0,4 mm bis 1,5 mm beträgt. Besonders vorteilhaft ist dabei auch eine Ausführung, bei der die Erhebungen innerhalb des schraffurartig gestalteten Flächenelementes die gleiche Höhe aufweisen, wobei diese Höhe 0,2 mm bis 1,5 mm betragen sollte, insbesondere bis zu 0,4 mm. Die Breite der Erhebungen an ihrer Basis kann bevorzugter Weise das 0,4-Fache bis 2-Fache ihrer Höhe betragen

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 schematisch einen Ausschnitt einer Seitenwand eines Fahrzeugluftreifens in Draufsicht mit einer Ausführungsform der Erfindung,
Fig. 1a einen Schnitt entlang der Linie Ia-Ia der Fig. 1 und
Fig. 2 bis Fig. 4 Ausführungsvarianten der Konstruktion erfindungsgemäßer schraffurartig gestalteter Flächenelemente in Seitenwänden von Fahrzeugluftreifen.

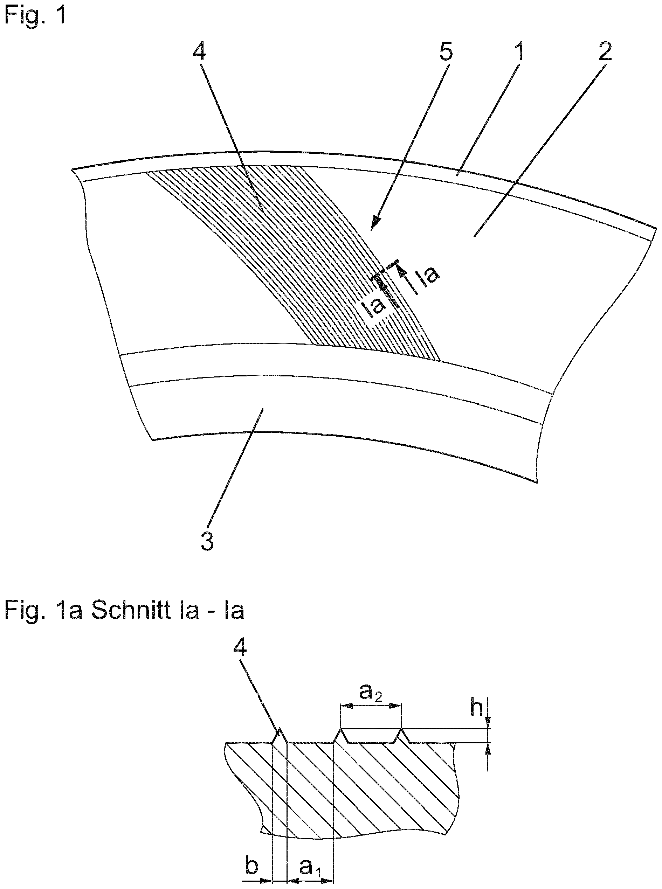

Fig. 1 zeigt schematisch einen Umfangsabschnitt der Seitenansicht eines Fahrzeugluftreifens mit einem Laufstreifenauslauf 1, einer Seitenwand 2 und einem Wulstbereich 3, welcher bei auf einer Felge montiertem Reifen durch die Felge zumindest teilweise abgedeckt ist.

In Fig. 1 ist auf der Seitenwand 2 ein gemäß der Erfindung ausgeführtes schraffurartig gestaltetes Flächenelement 5 mit zueinander parallel und gleichzeitig auf besondere Weise bogenförmig verlaufenden Erhebungen 4 dargestellt. Bei weiteren, nicht dargestellten Varianten kann das Flächenelement 5 auch Buchstaben, Ziffern und dergleichen bilden. Als "Schraffur" werden üblicherweise Flächenelemente in der Seitenwand eines Fahrzeugluftreifens bezeichnet, die sich jeweils aus einer Vielzahl von im Querschnitt beispielsweise dreieckförmigen oder halbkreisförmigen, übereinstimmend ausgeführten Erhebungen zusammensetzen, die nebeneinander verlaufen. Die in Fig. 1 und 1a gezeigten Erhebungen 4 sind beispielhaft im Querschnitt im Wesentlichen Dreiecke, beispielsweise gleichseitige Dreiecke, und weisen eine Erstreckungshöhe h auf, die 0,2 mm bis 1,0 mm beträgt, bei PKW-Reifen üblicherweise in der Größenordnung von 0,2 mm bis 0,4 mm und bei LKW-Reifen üblicherweise in der Größenordnung von 0,5 mm bis 0,8 mm. Innerhalb eines bestimmten Flächenelementes 5 weisen die Erhebungen 4 insbesondere übereinstimmende Erstreckungshöhen h auf. Der gegenseitige Abstand a₁ zwischen der Basis von einander benachbart verlaufenden Erhebungen 4 beträgt üblicherweise 0,1 mm bis 1,0 mm, der gegenseitige Abstand a₂ zwischen den höchsten Stellen beträgt etwa 0,4 mm bis 1,5 mm. Bei gemäß der Erfindung ausgeführten Flächenelementen 5 bleibt der gegenseitige Abstand a₁ zwischen einander benachbart verlaufenden Erhebungen 4 über den Verlauf der Erhebungen 4 innerhalb des Flächenelementes 5 konstant, wie noch beschrieben wird. An ihrer Basis besitzen die Erhebungen 4 eine Breite b, die größer oder kleiner sein kann als die Erstreckungshöhe h, je nachdem, welche Querschnittsgestalt die Erhebungen 4 aufweisen. Üblicherweise bewegt sich die Größe der Breite b in einem Bereich des 0,4-Fachen bis 2-Fachen der Erstreckungshöhe h.

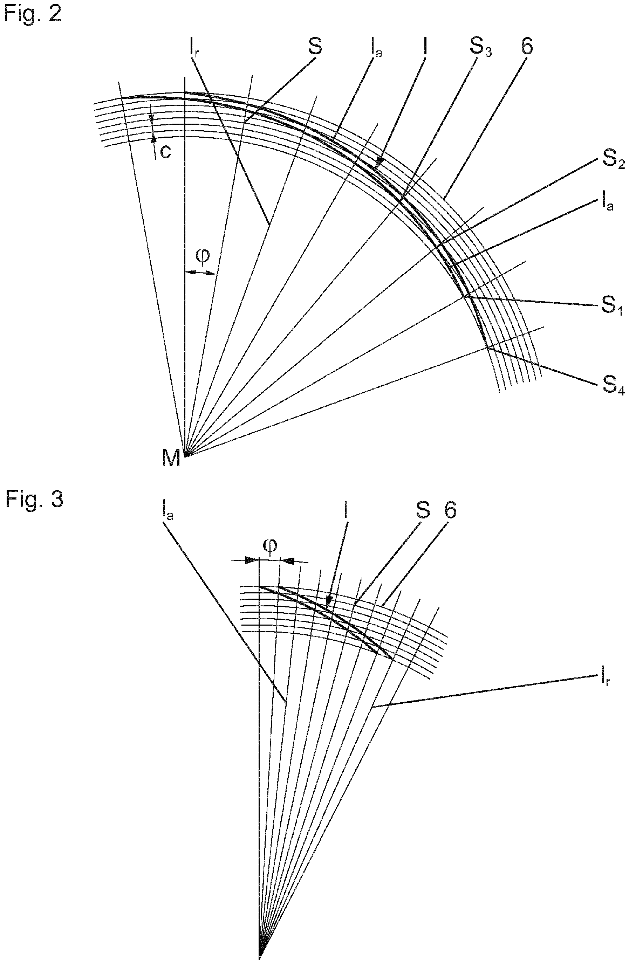

Die Ausführung und die Konstruktion erfindungsgemäßer Flächenelemente 5 werden nun anhand der Figuren 2 bis 4, die Ansichten gemäß einer Draufsicht auf die Reifenseitenwand 2 zeigen, näher erläutert.

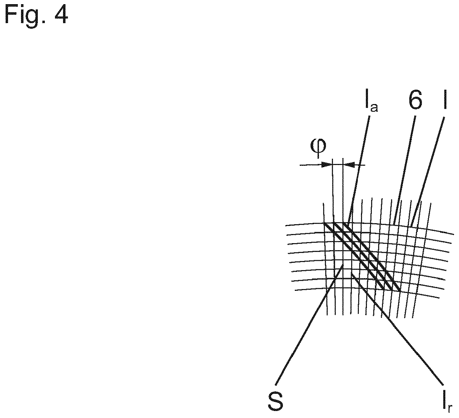

Mit M ist der auf der Reifenachse liegende Mittelpunkt einer Vielzahl konzentrischer Kreise 6 bezeichnet. Die konzentrischen Kreise 6 umlaufen daher die kreisringförmige Reifenseitenwand 2. Vom Mittelpunkt M aus verlaufen radiale Hilfslinien lᵣ unter gleich großen Zentriwinkeln ϕ, wobei bei der in Fig. 2 gezeigten Ausführungsform die Zentriwinkel ϕ 10°, bei der in Fig. 3 gezeigten Ausführung 5° und bei der in Fig. 4 gezeigten Ausführung 2° betragen. Die Hilfslinien lᵣ schneiden die konzentrischen Kreise 6 in Schnittpunkten S. Entlang von Schnittpunkten S wird eine Linienschar aus parallel zueinander verlaufenden Linien 1 gezogen, die als Basis für den Verlauf der Erhebungen 4 herangezogen werden, die ein Flächenelement 5 mit der gewünschten äußeren Kontur bilden.

Eine einzelne Linie 1 setzt sich aus einer Vielzahl von Linienabschnitten lₐ zusammen, wie nun anhand der Fig. 2 näher erläutert wird, welche zwei Linien 1 zeigt. Der erste Linienabschnitt lₐ der radial weiter innen verlaufenden Linie 1 beginnt bei einem Schnittpunkt S₁ des gewählten innersten konzentrischen Kreises 6 mit einer Hilfslinie lᵣ und verbindet diesen Schnittpunkt S₁ geradlinig mit dem Schnittpunkt S₂ zwischen der hier beispielsweise entgegen dem Uhrzeigersinn benachbarten radialen Hilfslinie lᵣ und dem zweiten, weiter außen verlaufenden konzentrischen Kreis 6. Der nächste Linienabschnitt lₐ wird zwischen dem Schnittpunkt S₂ und dem Schnittpunkt S₃ zwischen der nächsten entgegen dem Uhrzeigersinn folgenden radialen Hilfslinie lᵣ und dem dritten konzentrischen Kreis 6 gezogen. Auf analoge Weise werden die weiteren Linienabschnitte lₐ der betreffenden Linie 1 gebildet, die insgesamt gebogen verläuft. Die nächste, benachbarte Linie l der Linienschar ergibt sich auf analoge Weise aus Linienabschnitten lₐ, wobei der erste Linienabschnitt lₐ, der radial innerste, am Schnittpunkt S₄ des innersten Kreises 6 mit jener radialen Hilfslinie lᵣ beginnt, welche im Uhrzeigersinn benachbart zu jener radialen Hilfslinie lᵣ verläuft, die den Anfangspunkt bzw. den Schnittpunkt S₁ der zuerst beschriebenen Linie 1 bestimmt. Auf die beschriebene Weise wird eine Linienschar aus parallel zueinander und insgesamt bogenförmig verlaufenden Linien 1 erstellt. Der Verlauf der Erhebungen 4 folgt nun Kurven, die kurvenstetig über die Linien 1 gelegt werden, sodass die Erhebungen 4 bogenförmig und parallel zueinander verlaufen, mit Krümmungsradien, die von radial außen nach radial innen kleiner werden. Die Krümmung der Bogenform der Erhebungen 4 wird daher zum Zentrum des Reifens, in Richtung Reifenachse, stärker.

Wie erwähnt beträgt bei der in Fig. 3 gezeigten Ausführungsform der Zentriwinkel ϕ zwischen den radialen Hilfslinien lᵣ 5°, bei der in Fig. 4 gezeigten Ausführungsform 2°. Die Größe des Zentriwinkels ϕ bestimmt den bogenförmigen Verlauf der Erhebungen 4 in den Flächenelementen 5 auf der Seitenwand 2. Je kleiner der Zentriwinkel ϕ gewählt wird, umso mehr nähert sich der bogenförmige Verlauf der radialen Richtung. Bei der in Fig. 2 gezeigten Ausführung mit einem Zentriwinkel ϕ von 10° verläuft die gebildete Schraffur nahezu in Umfangsrichtung der Seitenwand 2.

Die konzentrischen Kreise 6 verlaufen unter gleich großen gegenseitigen Abständen c. Die Größe des Abstandes c bestimmt den Abstand a₂ zwischen den Erhebungen 8 und wird an den gewünschten Abstand a₂ zwischen den Erhebungen 8 angepasst.

Die auf der Reifenseitenwand 2 erfindungsgemäß erstellten Flächenelemente 5 weisen somit Erhebungen 4 auf, die für eine gleichmäßige Reflexion von Licht an jeder Stelle des Flächenelementes 5 sorgen, der Reflexionsgrad ist an jeder Stelle des Flächenelementes 5 gleich groß. Dadurch ergibt sich auch ein sehr homogener Graubereich zwischen den einzelnen Erhebungen 4 innerhalb des Flächenelementes 5.

Fig. 1 bis Fig. 4 sind in die Ebene projizierte Ansichten. Infolge ihrer Ausführung bzw. ihrer Konstruktion verlaufen die Erhebungen 4, die ein schraffurartig gestaltetes Flächenelement 5 bilden, auch auf der leicht nach außen gewölbten Seitenwand 2 für einen Betrachter zueinander parallel.

### Bezugsziffernliste

- 1: Laufstreifenauslauf
- 2: Seitenwand
- 3: Wulstbereich
- 4: Erhebung
- 5: Flächenelement
- 6: Kreis
- 8: Erhebung
- a₁, a₂: Abstand
- b: Breite
- c: Abstand
- h: Erstreckungshöhe
- l: Linie
- lₐ: Linienabschnitt
- lᵣ: Hilfslinie
- M: Mittelpunkt
- S, S₁, S₂, S₃, S₄: Schnittpunkt
- ϕ: Zentriwinkel

## Patentansprüche

1. Fahrzeugreifen mit zwei Seitenwänden (2) und mit zumindest einem schraffurartig gestalteten Flächenelement (5) auf zumindest einer Seitenwand (2), welches eine Vielzahl von nebeneinander und bogenförmig verlaufenden Erhebungen (4) aufweist, welche von radial innen nach radial außen unter einem zunehmenden spitzen Winkel zur radialen Richtung und parallel zueinander verlaufen,
**dadurch gekennzeichnet,**
**dass** der Krümmungsradius des bogenförmigen Verlaufes der Erhebungen (4) von radial außen nach radial innen kleiner wird, wobei die Erhebungen (4) kurvenstetig entlang von Linien (1) einer Linienschar verlaufen, welche Linien (1) sich aus Linienabschnitten (la) zusammensetzen, die Schnittpunkte (S, S₁, S₂, S₃, S₄) zwischen einander benachbarten, gleich beabstandeten, konzentrischen Kreisen (6), deren Mittelpunkt (M) auf der Reifenachse liegt, und einander benachbarten radialen Hilfslinien (lᵣ), die unter gleich großen Zentriwinkeln (ϕ) verlaufen, verbinden.

2. Fahrzeugreifen nach Anspruch 1, **dadurch gekennzeichnet, dass** der gegenseitige Abstand (c) der konzentrischen Kreise (6) an den gegenseitigen Abstand (a₂) der höchsten Stellen bzw. der Mitte der Erhebungen (4) angepasst ist.

3. Fahrzeugreifen nach Anspruch 1 oder 2, **dadurch gekennzeichnet, dass** der Zentriwinkel (ϕ) zwischen den radialen Hilfslinien (lᵣ) maximal 15° beträgt.

4. Fahrzeugreifen nach einem der Ansprüche 1 bis 3, **dadurch gekennzeichnet, dass** der Zentriwinkel (ϕ) zwischen den radialen Hilfslinien (lᵣ) mindestens 1°, insbesondere mindestens 2°, beträgt.

5. Fahrzeugluftreifen nach einem der Ansprüche 1 bis 4, **dadurch gekennzeichnet, dass** der Zentriwinkel (ϕ) zwischen den radialen Hilfslinien (lᵣ) bis zu 10° beträgt.

6. Fahrzeugreifen nach einem der Ansprüche 1 bis 5, **dadurch gekennzeichnet, dass** der gegenseitige Abstand (a₂) der höchsten Stellen bzw. der Mitte von einander benachbarten Erhebungen (4) 0,4 mm bis 1,5 mm beträgt.

7. Fahrzeugreifen nach einem der Ansprüche 1 bis 6, **dadurch gekennzeichnet, dass** die Erhebungen (4) innerhalb eines schraffurartig gestalteten Flächenelementes (5) eine gleiche Höhe (h) aufweisen, welche 0,2 mm bis 1,0 mm, insbesondere bis zu 0,4 mm, beträgt.

8. Fahrzeugreifen nach einem der Ansprüche 1 bis 7, **dadurch gekennzeichnet, dass** die Erhebungen (4) an ihrer Basis eine Breite (b) aufweisen, die das 0,4-Fache bis 2-Fache ihrer Höhe (h) beträgt.

## Claims

1. Pneumatic vehicle tyre with two sidewalls (2) and, on at least one sidewall (2), at least one hatched surface element (5), which comprises a multiplicity of adjacent and arc-shaped extending elevations (4), which extend from radially inside to radially outside at an increasing acute angle to the radial direction and parallel to one another,
**characterized**
**in that** the radius of curvature of the arc-shaped course of the elevations (4) becomes smaller from radially outside to radially inside, the elevations (4) running in continuous curves along lines (1) of a set of lines, which lines (1) are made up of line segments (lₐ), which join points of intersection (S, S₁, S₂, S₃, S₄) between adjacent, equally spaced-apart concentric circles (6), the centre point (M) of which lies on the axis of the tyre, and adjacent radial auxiliary lines (lᵣ), which run at equal centre angles (ϕ).

2. Pneumatic vehicle tyre according to Claim 1, **characterized in that** the spacing (c) between concentric circles (6) is adapted to the spacing (a₂) between the highest point or the centre of the elevations (4).

3. Pneumatic vehicle tyre according to Claim 1 or 2, **characterized in that** the centre angle (ϕ) between the radial auxiliary lines (lᵣ) is a maximum of 15°.

4. Pneumatic vehicle tyre according to one of Claims 1 to 3, **characterized in that** the centre angle (ϕ) between the radial auxiliary lines (lᵣ) is at least 1°, in particular at least 2°.

5. Pneumatic vehicle tyre according to one of Claims 1 to 4, **characterized in that** the centre angle (ϕ) between the radial auxiliary lines (lᵣ) is up to 10°.

6. Pneumatic vehicle tyre according to one of Claims 1 to 5, **characterized in that** the spacing (a₂) between the highest points or the centre of adjacent elevations (4) is 0.4 mm to 1.5 mm.

7. Pneumatic vehicle tyre according to one of Claims 1 to 6, **characterized in that** the elevations (4) have an equal height (h) within a hatched surface element (5), which is 0.2 mm to 1.0 mm, in particular up to 0.4 mm.

8. Pneumatic vehicle tyre according to one of Claims 1 to 7, **characterized in that** the elevations (4) have at their base a width (b) which is 0.4 times to 2 times their height (h).

## Revendications

1. Pneumatique de véhicule, comprenant deux flancs (2) et au moins un élément plan (5) configuré de manière hachurée sur au moins un flanc (2) et qui présente une pluralité de saillies (4) s'étendant côte à côte et en forme d'arc et qui s'étendent radialement de l'intérieur vers l'extérieur selon un angle aigu croissant par rapport à la direction radiale et en parallèle les unes aux autres,
**caractérisé en ce que** le rayon de courbure du tracé en forme d'arc des saillies (4) diminue radialement de l'extérieur vers l'intérieur, les saillies (4) s'étendant en courbe continue le long des lignes (1) d'un système de lignes, lesquelles lignes (1) étant composées de sections de ligne (lₐ) qui relient des points d'intersection (S, S₁, S₂, S₃, S₄) entre des cercles concentriques (6) voisins les uns aux autres, équidistants et dont le centre (M) est situé sur l'axe de pneumatique, et des lignes auxiliaires radiales (lᵣ) voisines qui s'étendent selon des angles au centre (ϕ) de même dimension.

2. Pneumatique de véhicule selon la revendication 1, **caractérisé en ce que** la distance mutuelle (c) des cercles concentriques (6) est adaptée à la distance mutuelle (a₂) des points les plus hauts ou du centre des saillies (4).

3. Pneumatique de véhicule selon la revendication 1 ou 2, **caractérisé en ce que** l'angle au centre (ϕ) entre les lignes auxiliaires radiales (lᵣ) est au maximum égal à 15°.

4. Pneumatique de véhicule selon l'une quelconque des revendications 1 à 3, **caractérisé en ce que** l'angle au centre (ϕ) entre les lignes auxiliaires (lᵣ) est au moins égal à 1°, en particulier à 2°.

5. Pneumatique de véhicule selon l'une quelconque des revendications 1 à 4, **caractérisé en ce que** l'angle au centre (ϕ) entre les lignes auxiliaires (lᵣ) peut aller jusqu'à 10°.

6. Pneumatique de véhicule selon l'une quelconque des revendications 1 à 5, **caractérisé en ce que** la distance mutuelle (a₂) des points les plus hauts ou du centre de saillies (4) voisines les unes des autres mesure de 0,4 mm à 1,5 mm.

7. Pneumatique de véhicule selon l'une quelconque des revendications 1 à 6, **caractérisé en ce que** les saillies (4) présentent à l'intérieur de l'élément plan (5) configuré de manière hachurée une même hauteur (h) qui mesure de 0,2 mm à 1,0 mm, en particulier jusqu'à 0,4 mm.

8. Pneumatique de véhicule selon l'une quelconque des revendications 1 à 7, **caractérisé en ce que** les saillies (4) présentent à leur base une largeur (b) qui est de 0,4 fois à 2 fois leur hauteur (h).
